# FASCICULE DE BREVET EUROPEEN

(11) **EP 3 891 401 B1**
(45) Date de publication et mention de la délivrance du brevet: **28.12.2022**
(21) Numéro de dépôt: 19835458.1
(22) Date de dépôt: 29.11.2019
(51) Int. Cl.: F04D 27/00, F02C 9/00

(54) **PROCEDE ET DISPOSITIF DE DETECTION D'UN DECOLLEMENT TOURNANT AFFECTANT UN COMPRESSEUR D'UN TURBOREACTEUR**
VERFAHREN UND VORRICHTUNG ZUR ERKENNUNG EINES ROTIERENDEN STRÖMUNGSABRISSES MIT NACHTEILIGER AUSWIRKUNG AUF EINEN TURBOSTRAHLTRIEBWERKSVERDICHTER
METHOD AND DEVICE FOR DETECTING A ROTATING STALL ADVERSELY AFFECTING A TURBOJET ENGINE COMPRESSOR

(30) Priorité: 03.12.2018 FR 1872254
(43) Date de publication de la demande: 13.10.2021
(73) Titulaire: SAFRAN AIRCRAFT ENGINES, 75015 Paris (FR)
(72) Inventeur: HERDA, Soufiane, 77550 MOISSY-CRAMAYEL (FR); CABRET, Vincent, 77550 MOISSY-CRAMAYEL (FR); DJELASSI, Cedrik, 77550 MOISSY-CRAMAYEL (FR)
(74) Mandataire: Cabinet Beau de Loménie
(86) Numéro de dépôt international: PCT/FR2019/052853
(87) Numéro de publication internationale: WO 2020/115405

(56) Documents cités:
- WO-A1-2012/004506
- FR-A1- 2 557 217
- US-B2- 9 988 930
- US-E- R E34 388

## Description

### Technique antérieure

La présente invention se rapporte au domaine général des turbomachines aéronautiques. Elle concerne plus particulièrement la détection d'un décollement tournant affectant un compresseur d'un turboréacteur équipant un aéronef.

L'invention s'applique de façon privilégiée mais non limitative aux turboréacteurs, équipant les avions civils, et notamment ceux amenés à faire des décollages par temps très froid, à des températures typiquement inférieures à - 20°C. L'invention s'applique plus particulièrement aux turboréacteurs à double corps (un corps basse pression et un corps haute pression) de relativement petite taille, par exemple tels que ceux équipant les avions d'affaire. En effet, la relativement petite taille d'un turboréacteur à double corps contraint la taille et/ou l'architecture du compresseur haute pression. Cela induit généralement des différences de comportement au niveau du compresseur haute pression, par rapport à un moteur plus volumineux tel qu'utilisé pour un avion de ligne dans lequel le compresseur haute pression est nécessairement de plus grande taille. Le risque d'apparition d'un décollement tournant dans un compresseur d'un turboréacteur de relativement petite taille est donc comparativement plus important que dans un turboréacteur de plus grande taille.

De façon connue, un décollement tournant est une instabilité aérodynamique affectant le compresseur d'un turboréacteur, et qui se caractérise par la présence d'une ou de plusieurs poches de fluide localisées (appelées cellules ou poches de décollement), se propageant dans la direction circonférentielle du compresseur, à une vitesse généralement inférieure à la vitesse de rotation du compresseur.

Cette instabilité induit, de façon générale, un affaiblissement des caractéristiques de compression et se manifeste notamment par une chute du rendement dans le compresseur entraînant une surchauffe du turboréacteur. Lorsque ce phénomène de surchauffe apparaît au démarrage du turboréacteur, le démarrage doit être avorté et se traduit par une incapacité à démarrer du turboréacteur. En outre, l'instabilité résultant de la présence d'un décollement tournant est responsable de phénomènes vibratoires importants qui peuvent conduite à une usure prématurée des aubages du compresseur.

On comprend donc aisément l'importance de pouvoir détecter rapidement et de manière fiable l'apparition d'un décollement tournant dans le compresseur d'un turboréacteur.

Le document WO 2012/004506 décrit une technique de détection combinant la surveillance de plusieurs signatures comportementales associées au phénomène de décollement tournant. Plus spécifiquement, un décollement tournant affectant le compresseur d'un turboréacteur est détecté lorsqu'on détermine que la température en sortie de la turbine du turboréacteur subit une augmentation supérieure à un seuil prédéterminé par rapport à la valeur qu'elle avait à un instant particulier correspondant à l'identification d'une accélération anormale du turboréacteur, d'une chute anormale de son régime, ou d'une ligne de fonctionnement (rapport de pression entre la pression en sortie de la chambre de combustion du turboréacteur et la pression totale en entrée de la soufflante) anormale du compresseur.

L'invention propose une technique de détection alternative particulièrement bien adaptée pour les turboréacteurs utilisés dans l'aviation d'affaire ou pour les turboréacteurs de taille équivalente.

### Exposé de l'invention

L'invention vise plus particulièrement un procédé de détection d'un décollement tournant affectant un compresseur d'un turboréacteur, ce procédé comprenant :
- une étape de détermination d'un niveau de variation d'une pression statique dans une chambre de combustion du turboréacteur autour d'une valeur moyenne de cette pression statique ;
- une étape de comparaison du niveau de variation de la pression statique par rapport à un premier seuil ;
- une étape de comparaison d'une tempèrature mesurée en sortie d'une turbine du turboréacteur par rapport à un deuxième seuil ; et
- si le niveau de variation de la pression statique est supérieur au premier seuil et la température en sortie de la turbine est supérieure au deuxième seuil, une étape de détection d'une présence d'un décollement tournant.

Corrélativement, l'invention concerne également un dispositif de détection d'un décollement tournant affectant un compresseur d'un turboréacteur, comprenant :
- un module de détermination, configuré pour déterminer un niveau de variation d'une pression statique dans une chambre de combustion du turboréacteur autour d'une valeur moyenne de cette pression statique ;
- un premier module de comparaison, configuré pour comparer le niveau de variation de la pression statique par rapport à un premier seuil ;
- un deuxième module de comparaison configuré pour comparer une température mesurée en sortie d'une turbine du turboréacteur par rapport à un deuxième seuil ; et
- un module de détection d'une présence d'un décollement tournant, activé si le niveau de variation de la pression statique est supérieur au premier seuil et la température en sortie du compresseur basse pression est supérieure au deuxième seuil.

L'invention propose donc une technique, de détection basée sur deux signatures comportementales du décollement tournant, à savoir la présence de « bruit » sur la pression statique au niveau de la chambre de combustion du turboréacteur et un niveau anormalement élevé de la température en sortie d'une turbine du turboréacteur telle que par exemple de la turbine basse pression pour un turboréacteur double-corps, cette température étant aussi connue sous le nom de température EGT (pour Exhaust Gaz Temperature).

Par bruit, on entend ici que la pression statique subit des perturbations ou des variations anormales (c'est-à-dire supérieures à un seuil donné) autour de sa valeur moyenne, aussi désignée ici par valeur nominale. Cette valeur moyenne peut être déterminée par exemple en appliquant un filtrage des hautes fréquences sur le signal de mesure de la pression statique dans la chambre de combustion.

De telles variations sont symptomatiques d'une instabilité dans le compresseur du turboréacteur. Les inventeurs ont constaté que cette signature comportementale, combinée à une température EGT excessive, sont particulièrement pertinentes pour détecter de manière fiable la présence d'un décollement tournant dans un turboréacteur de la taille de ceux utilisés dans l'aviation d'affaires. Grâce à cette détection fiable, l'invention offre la possibilité de déclencher de manière réactive et efficace des techniques d'accommodation d'un tel décollement tournant. De telles techniques sont connues en soi et ne sont pas décrites ici.

Dans un mode particulier de réalisation, l'étape de détermination comprend :
- une étape d'évaluation, pour une pluralité d'échantillons d'un signal de mesure de la pression statique dans la chambre de combustion, d'une différence entre la valeur de la pression statique pour ces échantillons et la valeur moyenne de la pression statique ;
- pour chaque paire d'échantillons successifs de la pluralité d'échantillons comprenant un premier et un deuxième échantillon :
   - une étape de calcul d'un écart entre la différence évaluée pour le premier échantillon et la différence évaluée pour le deuxième échantillon :
   - une étape de mise à jour d'un compteur en fonction de l'écart déterminé, ce compteur représentant le niveau de variation de la pression statique par rapport à sa valeur moyenne.

Corrélativement, dans ce mode de réalisation, le module de détermination du dispositif de détection selon l'invention comprend :
- un module d'évaluation, configuré pour évaluer pour une pluralité d'échantillons d'un signal de mesure de la pression statique dans la chambre de combustion, une diffèrence entre la valeur de la pression statique pour lesdits échantillons et la valeur moyenne de la pression statique ;
- un module de calcul et un module de mise à jour, activés pour chaque paire d'échantillons successifs de la pluralité d'échantillons comprenant un premier et un deuxième échantillon :
   - le module de calcul étant configuré pour calculer un écart entre la différence évaluée pour le premier échantillon et la différence évaluée pour le deuxième échantillon ; et
   - le module de mise à jour étant configuré pour mettre à jour un compteur en fonction de l'écart déterminé, ce compteur représentant le niveau de variation de la pression statique par rapport à sa valeur moyenne.

Ce mode particulier de réalisation propose d'évaluer le niveau de variation de la pression statique de la chambre de combustion en s'appuyant sur le principe de la longueur de corde d'un signal, à savoir ici de la longueur de corde du signal de mesure de cette pression statique. Ce principe est fondé sur le constat suivant : un signal partant d'un état initial atteint un état final en parcourant un chemin d'une longueur donnée. La distance parcourue sur ce chemin, comparée à la distance nominale (moyenne) de parcours pour atteindre l'état final partant de l'état initial, permet de savoir si le signal a parcouru une distance plus importante que celle prévue et donc si son parcours a été perturbé par rapport à la normale. Un parcours perturbé correspond à un signal qui a subi des variations, i.e. des perturbations, par rapport à sa valeur nominale, et que l'on qualifie ici de bruité par rapport à cette valeur nominale. Comme mentionné précédemment, un tel signal est symptomatique d'une instabilité dans le compresseur haute pression du turboréacteur et représente en soi une signature comportementale d'un décollement affectant le compresseur.

La valeur moyenne de la pression statique est utilisée pour déterminer si le signal de pression est bruité. L'évaluation de l'écart à cette valeur moyenne permet de déterminer le caractère instationnaire du bruit. Si la variation temporelle entre les écarts associés à deux échantillons successifs du signal est importante, cela signifie que l'on a une forte variation du signal autour de sa valeur moyenne. La mise à jour d'un compteur en fonction de la variation temporelle constatée entre plusieurs échantillons successifs du signal de pression permet de quantifier le niveau de variation du signal de pression autour de sa valeur nominale et de détecter si ce niveau de variation reflète ou non un comportement anormal du turboréacteur. Lorsque le compteur atteint un certain seuil, un indicateur reflétant la présence potentielle d'un décollement tournant est activé ; cet indicateur confronté à la température EGT permet de déduire si un décollement tournant est effectivement présent ou non dans le turboréacteur.

Dans un mode particulier de réalisation, l'étape de mise à jour comprend :
- une décrémentation du compteur si l'écart déterminè est inférieur ou égal à un troisième seuil ; et
- une incrémentation du compteur si l'écart déterminé est supérieur au troisième seuil.

Ce mode de réalisation permet de s'accommoder de la présence d'un bruit « naturel » lié notamment à l'acquisition du signal de mesure de la pression, à son traitement numérique (ex. erreurs numériques au filtrage du signal de pression pour déterminer sa valeur nominale), etc.

Par exemple, lors d'une incrémentation du compteur, le compteur est incrémenté d'une valeur qui est une fonction croissante de l'écart déterminé, et/ou lors d'une décrémentation du compteur, le compteur est décrèmenté d'une valeur inférieure aux valeurs utilisées pour incrémenter le compteur lors d'incrèmentations du compteur.

Ceci permet de garder en mémoire (i.e. dans la valeur courante du compteur) le fait qu'une variation substantielle de la pression statique par rapport à sa valeur moyenne a été rencontrée, et de maintenir la surveillance active du compteur.

Dans un mode particulier de réalisation, le procédé de détection comprend en outre :
- une étape de détection d'une variation d'une position d'une géométrie variable du turboréacteur susceptible d'engendrer une variation de la pression statique dans la chambre de combustion ; et
- une étape de suspension de l'étape de mise à jour du compteur tant que ladite variation de la position de la géométrie variable est dètectée.

Ce mode de réalisation permet de tenir compte d'événements, tels que des variations de position de géométries variables du turboréacteur, qui peuvent avoir une influence sur la pression statique dans la chambre de combustion du turboréacteur et entraîner des variations parfois substantielles de celle-ci. Ces variations étant normales, elles ne sont pas prises en compte dans ce mode de réalisation pour estimer le niveau de variation de la pression statique afin d'éviter une détection indue d'un décollement tournant. La robustesse du procédé de détection selon l'invention est ainsi améliorée.

On note qu'en variante, d'autres événements peuvent déclencher une suspension de la mise á jour du compteur représentatif du niveau de variation de la pression statique autour de sa valeur moyenne.

Dans un mode particulier de réalisation, suite à la détection de la présence d'un décollement tournant, le procédé comprend :
- une étape de traitement du décollement tournant ; et
- suite à l'étape de traitement, une étape de réinitialisation du compteur.

Ceci permet de rèinitialiser la surveillance du turboréacteur et de tenir compte de l'intervention opérée sur le turboréacteur pour résorber le décollement tournant.

Dans un mode particulier de rèalisation, l'étape de détermination du niveau de variation de la pression statique et les étapes de comparaison sont mises en œuvre suite à la détection d'un allumage du turboréacteur et d'une autorisation effective d'injection de carburant dans le turboréacteur.

Ceci permet d'optimiser la surveillance et de se limiter aux situations où un décollement tournant peut effectivement être rencontré sur le turboréacteur.

Dans un mode particulier de réalisation, les différentes étapes du procédé de détection sont déterminées par des instructions de programmes d'ordinateurs.

En conséquence, l'invention vise aussi un programme d'ordinateur sur un support d'informations, ce programme étant susceptible d'être mis en œuvre dans un dispositif de détection ou plus généralement dans un ordinateur, ce programme comportant des instructions adaptées à la mise en œuvre des étapes d'un procédé de détection tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un rèseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise également un turboréacteur comprenant un dispositif de détection selon l'invention.

Le turboréacteur bénéficie des mêmes avantages cités précédemment que le procédé et le dispositif de détection selon l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 représente, dans son environnement, un turboréacteur conforme à l'invention comprenant un dispositif de détection d'un décollement tournant selon l'invention ;
[Fig. 2] la figure 2 représente schématiquement l'architecture matérielle d'un calculateur du turboréacteur intégrant le dispositif de détection selon l'invention, dans un mode particulier de réalisation ;
[Fig. 3] la figure 3 représente les principales étapes d'un procédé de détection selon l'invention telles qu'elles sont mises en œuvre par le dispositif de détection de la figure 1 ;
[Fig. 4A] la figure 4A illustre les variations des écarts de la pression statique par rapport à sa valeur nominale dans un cas de figure ;
[Fig. 4B] la figure 4A illustre les variations des écarts de la pression statique par rapport à sa valeur nominale dans un autre cas de figure ; et
[Fig. 4C] la figure 4A illustre les variations des écarts de la pression statique par rapport à sa valeur nominale dans un autre cas de figure.

### Description des modes de réalisation

Comme mentionné précédemment, l'invention propose avantageusement de combiner plusieurs indicateurs ou signatures comportementales du turboréacteur associé(e)s au phénomène de décollement tournant, afin d'identifier de façon fiable sa présence dans un compresseur du turboréacteur. On entend ici par signature comportementale, un comportement caractéristique d'un paramètre de fonctionnement du turboréacteur (ex. pression statique dans la chambre de combustion du turboréacteur, température en sortie d'une turbine du turboréacteur, etc.), en présence d'un décollement tournant.

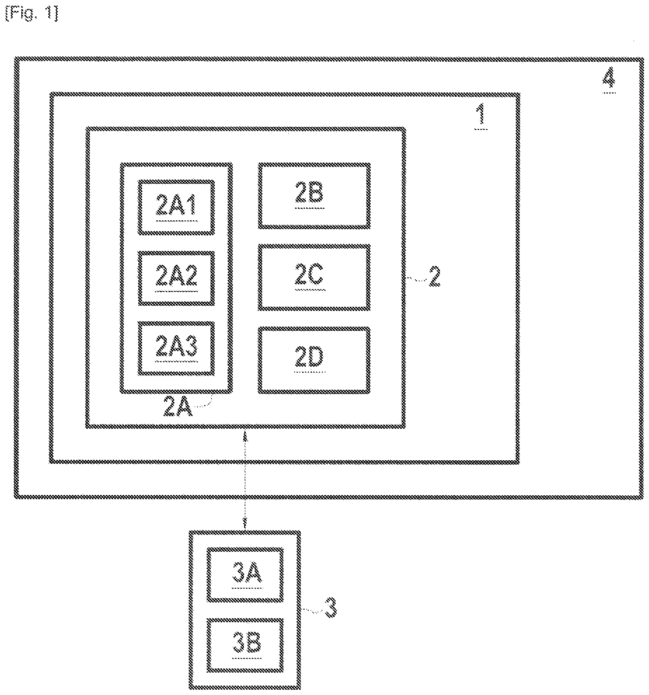

En rèférence à la figure 1, on s'intéresse plus particulièrement ici à un turboréacteur 1 double corps double flux équipant un avion d'affaire et comprenant un dispositif 2 de détection, conforme à l'invention. Le turboréacteur 1 comporte notamment, de façon connue, une soufflante, un compresseur axial basse pression, un compresseur axial haute pression, une chambre de combustion, une turbine haute pression et une turbine basse pression (non représentés sur la figure 1), ainsi que des capteurs 3 permettant de mesurer divers paramètres de fonctionnement du turboréacteur 1 tels que par exemple la pression statique dans la chambre de combustion (désignée par PS dans la suite de la description) ou encore la température en sortie de la turbine basse pression (désignée par température T dans la suite de la description).

Dans le mode de réalisation décrit ici, la pression statique PS dans la chambre de combustion est mesurée au moyen d'un capteur 3A disposé en entrée de la chambre de combustion, et la température T est mesurée au moyen d'un capteur 3B placé en sortie de la turbine basse pression du turboréacteur 1.

Un tel turboréacteur est par exemple un turboréacteur à double corps de relativement petite taille, tel que notamment ceux équipant les avions d'affaire. L'invention s'applique toutefois à d'autres turboréacteurs adaptés à un tel contexte présentant un risque d'apparition d'un décollement tournant dans un compresseur.

Conformément à l'invention, le dispositif 2 de détection considère, pour détecter la présence d'un décollement tournant affectant le turboréacteur 1, les deux indicateurs suivants :
- une pression statique PS bruitée (au-delà d'un certain seuil) dans la chambre de combustion du turboréacteur 1 ; et
- une température T excessive en sortie de la turbine basse pression du turboréacteur 1.

L'existence de ces indicateurs laisse présager la présence d'un décollement tournant affectant un compresseur du turboréacteur 1, comme par exemple le compresseur haute pression. Bien entendu, d'autres indicateurs en sus de ceuxci peuvent être envisagés pour renforcer encore la fiabilité de la détection et éviter notamment les fausses alarmes.

Dans le mode de réalisation décrit ici, le dispositif 2 de détection est intégré dans le calculateur 4 du turboréacteur 1. Un tel calculateur est connu en soi et n'est pas décrit en détail ici : il s'agit par exemple d'un dispositif de régulation pleine autorité de l'avion propulsé par le turboréacteur 1, également connu sous le nom de FADEC (Full Authority Digital Engine Control).

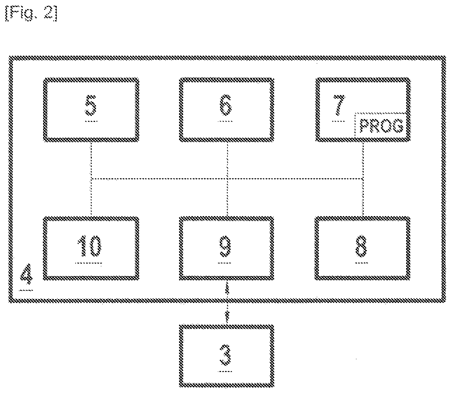

Le dispositif 2 de détection s'appuie sur les éléments matériels du calculateur 4 qui dispose de l'architecture matérielle d'un ordinateur représentée schématiquement à la figure 2. Le calculateur 4 comprend notamment un processeur 5, une mémoire vive 6, une mémoire morte 7, une mémoire flash non volatile 8, des moyens de communication 9 lui permettant notamment de communiquer avec les différents capteurs 3 embarqués à bord de l'avion équipé du turboréacteur 1 (et en particulier avec les capteurs 3A et 3B de pression et de température) ainsi que des moyens d'entrée/sortie 10 permettant au dispositif 2 de détection de signaler la présence d'un décollement tournant dans le turboréacteur 1, afin par exemple de déclencher une opération de maintenance permettant de s'accommoder de celui-ci.

Dans le mode de réalisation décrit ici, la mémoire morte 7 du dispositif 2 de détection constitue un support d'enregistrement conforme à l'invention, lisible par le processeur 5 et sur lequel est enregistré un programme d'ordinateur PROG conforme à l'invention, comportant des instructions pour l'exécution d'une partie des étapes du procédé de détection selon l'invention.

Le programme d'ordinateur PROG définit des modules fonctionnels (et logiciels ici) du dispositif 2 de détection qui utilisent ou s'appuient notamment sur les éléments matériels 5-10 du calculateur 4 mentionnés précédemment. Ces modules comprennent en particulier ici, comme illustré á la figure 1 :
- un module de détermination 2A, configuré pour déterminer un niveau de variation de la pression statique PS dans la chambre de combustion du turboréacteur 1 autour de sa valeur moyenne. Dans le mode de réalisation décrit ici, le module de détermination 2A comprend lui-même plusieurs (sous-)modules lui permettant de déterminer le niveau de variation de la pression statique PS, à savoir un module d'évaluation 2A1, un module de calcul 2A2 et un module de mise à jour 2A3, dont les fonctions respectives sont détaillées davantage ultérieurement ;
- un premier module de comparaison 2B, configuré pour comparer ce niveau de variation de la pression statique par rapport à un premier seuil référencé par THR1 ;
- un deuxième module de comparaison 2C, configuré pour comparer la température T mesurée en sortie de la turbine basse pression du turboréacteur 1 par rapport à un deuxième seuil noté THR2 : et
- un module de détection 2D d'une présence d'un décollement tournant, activé si le niveau de variation de la pression statique PS est supérieur au seuil THR1 et la température T en sortie de la turbine basse pression est supérieure au seuil THR2.

Les modules 2A à 2D sont décrits plus en détail maintenant en référence aux étapes du procédé de détection selon l'invention.

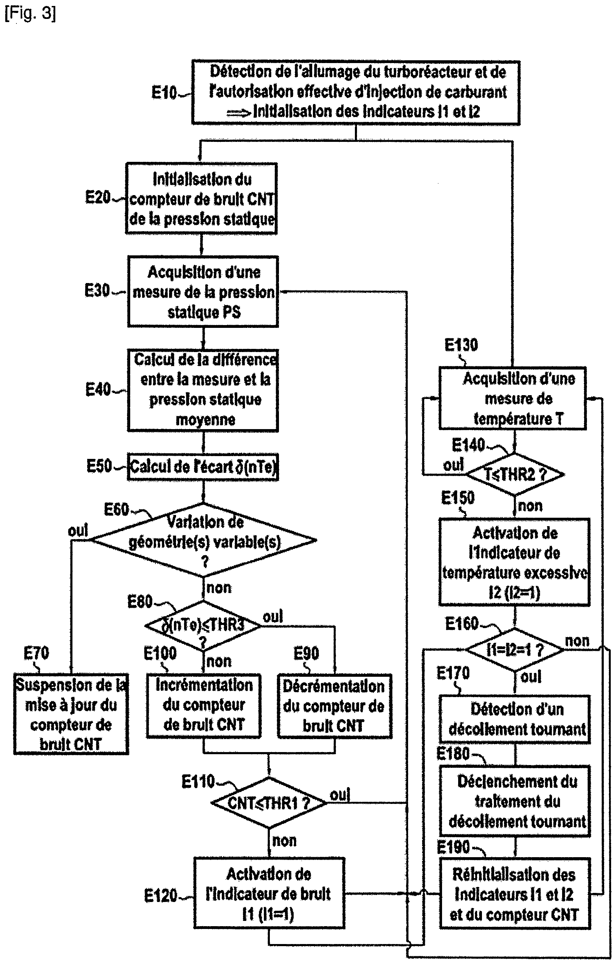

La figure 3 représente, sous forme d'ordinogramme, les principales étapes du procédé de détection selon l'invention, dans un mode particulier de réalisation dans lequel ces étapes sont mises en œuvre par le dispositif 2 de détection équipant le turboréacteur 1.

Dans l'exemple décrit ici, on envisage la détection d'un décollement tournant affectant le compresseur haute pression du turboréacteur 1. Cette hypothèse n'est toutefois pas limitative, l'invention pouvant également être appliquée au compresseur basse pression du turboréacteur 1.

De façon connue, un turboréacteur est susceptible de rencontrer une situation de décollement tournant lors de deux phases de fonctionnement distinctes du turboréacteur, à savoir :
- lors d'une phase de démarrage ou de rallumage du turboréacteur (turboréacteur en fonctionnement « sub-idle ») ; et/ou
- lors d'une phase de régulation de la poussée après démarrage (turboréacteur en fonctionnement « off-idle »).

Conformément au mode de réalisation décrit ici, pour préserver les ressources de l'avion et du calculateur 4, le procédé de détection selon l'invention n'est mis en œuvre par le dispositif 2 de détection que lorsque l'on a détecté un allumage du turboréacteur 1 et une autorisation effective d'injection de carburant dans le turboréacteur 1 (étape E10). Ces deux événements peuvent être aisément détectés en analysant les commandes de démarrage du turboréacteur 1, qui indiquent si celui-ci est dans une phase de démarrage/rallumage, ainsi que les consignes d'injection de carburant fournies notamment par le calculateur 4.

En variante, dans un autre mode de réalisation, le procédé de détection peut n'être mis en œuvre que lorsqu'on détecte que le turboréacteur 1 se trouve dans l'une ou l'autre des deux phases précitées, et ce, afin de préserver encore davantage les ressources de l'avion et du calculateur 4.

Suite à cette détection, le dispositif 2 de détection déclenche la surveillance de la pression statique PS dans la chambre de combustion du turboréacteur 1 et de la température T en sortie de la turbine basse pression du turboréacteur 1, conformément à l'invention.

Pour surveiller la pression statique PS dans la chambre de combustion du turboréacteur 1, et plus précisément le niveau de variation de la pression statique autour de sa valeur moyenne, le dispositif 2 de détection utilise, dans le mode de réalisation décrit ici, un compteur CNT aussi désigné par « compteur de bruit ». Ce compteur de bruit CNT est incrémenté et décrémenté de sorte à ëtre représentatif du niveau de variation de la pression statique PS. Il est initialisé à zéro suite à la détection de l'allumage du turboréacteur 1 et de l'autorisation effective d'injection de carburant dans le turboréacteur 1 (étape E20). D'autres événements pouvant entrainer une réinitialisation du compteur CNT sont décrits plus en détails ultérieurement.

Pour chaque mesure notée PS(t=nTe) acquise à un instant t=nTe par le capteur 3A de la pression statique PS dans la chambre de combustion (étape E30), où Te désigne la période d'acquisition du capteur 3A et n un entier supérieur ou égal à 0, le module de détermination 2A du dispositif 2 de détection évalue, par l'intermédiaire de son module d'évaluation 2A1, la différence notée ΔPS(nTe) entre la valeur PS(nTe) de la pression statique PS donnée par la mesure et la valeur moyenne (nominale) PSnom(nTe) de la pression statique PS évaluée à cet instant (étape E40), soit : ΔPS(nTe)=PS(nTe)-(PSnom(nTe)).

On note que chaque mesure acquise par le capteur 3A constitue un échantillon à l'instant nTe du signal de mesure temporel PS(t) de la pression statique au sens de l'invention, t désignant le temps.

Dans le mode de réalisation décrit ici, la valeur nominale ou moyenne PSnom(nTe) de la pression statique à l'instant nTe est obtenue en filtrant le signal de mesure PS(t) délivré par le capteur 3A de pression au moyen d'un filtre passe-bas. Ce filtrage permet de supprimer les variations de la pression dans le signal de mesure (en le débarrassant de ses composantes hautes frèquences). autrement dit de « débruiter » le signal acquis par le capteur 3A de mesure. Les paramètres du filtre passe-bas (gain, ordre, retard(s), etc.) sont choisis de sorte à filtrer le signal utile : leur détermination ne poserait aucune difficulté à l'homme du métier et n'est pas décrite ici.

La différence ΔPS(nTe) est stockée ici par le module de détermination 2A dans sa mémoire non volatile en association avec l'instant d'échantillonnage nTe.

Puis, le module de détermination 2A, par l'intermédiaire de son module de calcul 2A2, calcule l'écart noté δ(nTe) entre la différence ΔPS(nTe) calculée pour l'instant nTe et la différence ΔPS((n-1)Te) calculée pour la mesure de la pression statique acquise à l'instant précédent (n-1)Te (étape E50). Dans le mode de réalisation décrit ici, l'écart δ(nTe) est calculé par le module de calcul 2A2 à partir de la relation suivante : δ(nTe)=|ΔPS(nTe)-ΔPS((n-1)Te)|
où | | désigne la valeur absolue. L'écart δ(nTe) ainsi calculé correspond à la longueur du signal de mesure PS(t) de la pression statique entre les échantillons aux instants nTe et (n-1)Te.

Dans le mode de réalisation décrit ici, le module de détermination 2A détermine ensuite si des évènements prédéterminés susceptibles d'entraîner des variations de la pression statique PS(nTe) de la chambre de combustion autour de sa valeur moyenne sont en cours de réalisation (étape test E60). Un tel événement est par exemple la variation de la position d'une ou de plusieurs géométries variables du turboréacteur 1. Une géométrie variable d'un turboréacteur est un organe mobile dont la position peut être commandée pour agir sur la circulation d'un fluide dans le turboréacteur, par exemple un fluide tel que le flux de gaz dans la veine primaire, afin de contrôler le comportement du turboréacteur. Les géométries variables peuvent être des vannes, telles que par exemple des vannes de décharge d'air aussi communément désignées par VBV (pour Variable Bleed Valve) ou par HBV (pour Handling Bleed Valve) selon leur fonction par rapport à un compresseur basse pression ou un compresseur haute pression d'un turboréacteur ȧ double corps. Si le module de détermination 2A détecte un tel événement à bord du turboréacteur 1 (réponse oui à l'étape test E60), alors aucune mise à jour du compteur de bruit CNT n'est entreprise tant que l'événement est détectè (étape E70). Autrement dit, la mise à jour du compteur de bruit CNT est suspendue pendant toute la période où une variation de la position de la géométrie variable est opérée.

Sinon (réponse non à l'étape test E60), le module de détermination 2A compare, par l'intermédiaire de son module de mise à jour 2A3, l'écart δ(nTe) calculé avec différents seuils pour déterminer comment mettre à jour le compteur CNT en fonction de cet écart.

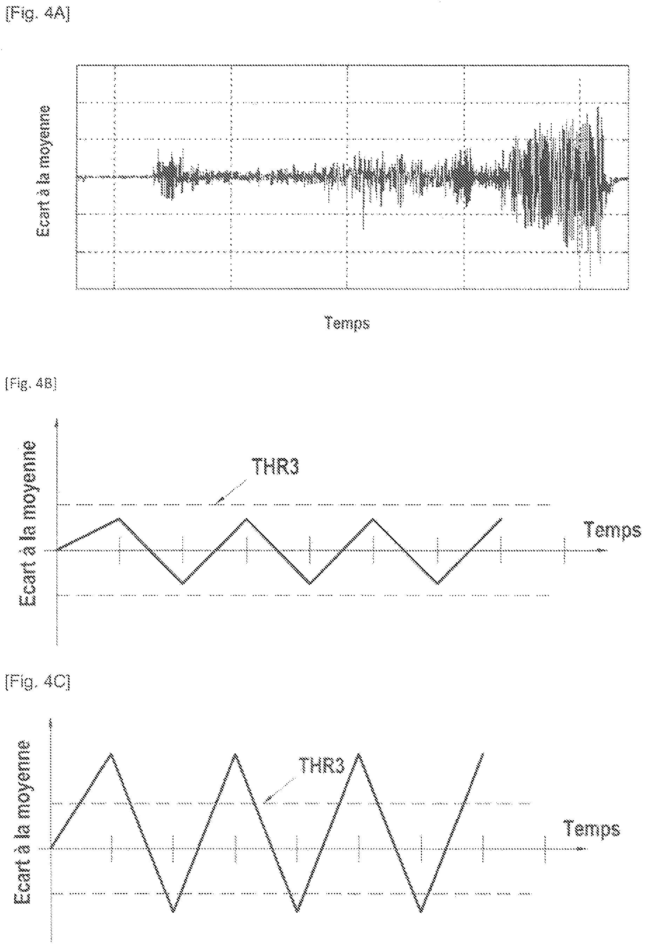

Plus précisément, il détermine dans un premier temps si l'écart δ(nTe) est représentatif d'un bruit dû â une instabilité du compresseur haute pression du turboréacteur 1 ou s'il est davantage dû à des perturbations ou des erreurs correspondant à d'autres phénomènes qui ne sont pas liés à proprement parler à un fonctionnement anormal du compresseur ou du turboréacteur (et a fortiori à un décollement tournant), comme par exemple à un bruit d'acquisition du signal de mesure ou á du bruit provenant d'erreurs numériques induites par le filtrage du signal de mesure opéré pour déterminer la valeur nominale de la pression statique, etc. Les inventeurs ont constaté que ces perturbations induisent par nature des écarts moindres entre les échantillons du signal de mesure par rapport aux écarts constatés en présence d'une instabilité du compresseur et le cas échéant d'un décollement tournant. La figure 4A illustre un exemple des variations des écarts de la pression statique par rapport à sa valeur moyenne dans le cas de la présence d'un décollement tournant. En d'autres mots, on constate une variation plus faible d'un échantillon à l'autre des variations de la pression statique autour de sa valeur moyenne. Pour tenir compte de ce comportement, et ainsi déterminer si l'écart δ(nTe) est représentatif d'un bruit dû à une instabilité du compresseur haute pression du turboréacteur 1, le module de mise à jour 2A3 compare l'écart δ(nTe) avec un seuil THR3 (troisième seuil au sens de l'invention), celui-ci pouvant être dèterminé aisèment expèrimentalement (étape test E80).

Si l'écart δ(nTe) est inférieur ou égal au seuil THR3 (réponse non à l'étape test E80, voir aussi la figure 4B illustrant ce cas de figure), alors le module de mise à jour 2A3 considére que cet écart n'est pas dû ȧ une instabilité du compresseur ni a fortiori à un décollement tournant : dans ce cas, le module de mise à jour 2A3 décrèmente le compteur de bruit CNT (étape E90).

Si en revanche l'écart δ(nTe) est supèrieur au seuil THR3 (réponse oui à l'étape test E60, voir aussi la figure 4C illustrant ce cas de figure), alors le module de mise à jour 2A3 considère que cet écart est dû à une instabilité du compresseur, et potentiellement à un décollement tournant : dans ce cas, le module de mise à jour 2A3 incrémente le compteur de bruit CNT (étape E100).

Dans le mode de réalisation décrit ici, la valeur utilisée pour incrémenter le compteur de bruit CNT à l'étape E100 dépend de la valeur de l'écart δ(nTe). Plus particulièrement ici, cette valeur varie linéairement en fonction de l'écart δ(nTe) selon une fonction croissante de celui-ci. En outre, la valeur utilisée pour décrémenter le compteur CNT le cas échéant lors de l'étape E90 est choisie inférieure aux valeurs utilisées pour incrémenter le compteur CNT. De cette sorte on s'assure de garder dans la valeur du compteur de bruit CNT une trace d'une variation importante de la pression statique PS.

On note par ailleurs, que pour èviter que le compteur de bruit CNT ne prenne des valeurs aberrantes, on peut envisager de le forcer à ne pas être inférieure à une valeur minimale (par exemple 0) et de ne pas dépasser une valeur maximale (par exemple 100). En d'autres mots, si au gré des incrémentations et des décrémentations, la valeur du compteur devient négative, elle est contrainte à 0, et si elle dépasse la valeur maximale définie (ex. 100), elle est contrainte à cette valeur maximale.

Le compteur de bruit CNT maintenu à jour par le module de mise à jour 2A3 reflète le niveau de variation de la pression statique PS dans la chambre de combustion du turboréacteur 1 par rapport à sa valeur moyenne. Il est comparé par le premier module de comparaison 2B du dispositif 2 de détection à un seuil THR1 (premier seuil au sens de l'invention) pour déterminer si ce niveau de variation est acceptable ou au contraire est symptomatique d'une instabilité du compresseur haute pression du turboréacteur 1 (étape test E110). Le seuil THR1 peut être aisément déterminé de façon expérimentale. Il est choisi suffisamment grand pour éviter tout risque de fausse détection.

Si le compteur de bruit CNT est inférieur ou égal au seuil THR1 (réponse oui á l'étape test E110), les étapes E30 à E110 sont réitérées avec une nouvelle mesure de la pression statique PS acquise par le capteur 3A.

Si le premier module de comparaison 2B détermine que le compteur de bruit CNT est supérieur au seuil THR1 (réponse non à l'étape test E120), alors il active un indicateur I1 dit de bruit de la pression statique PS indiquant qu'une instabilité du compresseur haute pression du turboréacteur 1 est suspectée (étape E120). Dans le mode de réalisation décrit ici, cette activation consiste à positionner l'indicateur I1 à la valeur 1.

Les étapes E30 à E120 sont ensuite rèitérées avec de nouvelles mesures de la pression statique PS acquises par le capteur 3A.

Comme mentionné précédemment, l'invention s'appuie sur la surveillance de plusieurs signatures comportementales d'un décollement tournant.Ainsi, outre les variations de la pression statique dans la chambre de combustion du turboréacteur 1, le dispositif 2 de détection surveille également, dans le mode de réalisation décrit ici, la température T en sortie de la turbine basse pression du turboréacteur 1. Une température T excessive, combinée à un niveau de variation de la pression statique PS autour de sa moyenne supérieure au seuil THR1 déclenche la détection d'un décollement tournant.

En paralléle des étapes E20 à E120 de surveillance du niveau de variation de la pression statique PS, le dispositif 2 de détection, par l'intermédiaire de son deuxième module de comparaison 2C, compare chaque mesure de la température T acquise par le capteur de température 3B (étape E130), par exemple à l'instant nTe, par rapport à un seuil THR2 prédétermitié (deuxième seuil au sens de l'invention) (étape test E140). Le seuil THR2 est fixé de sorte à détecter une température excessive en sortie de la turbine basse pression du turboréacteur 1, symptomatique d'un dysfonctionnement du compresseur et susceptible de provenir d'un phénomène de surchauffe du turboréacteur 1 en raison de la présence d'un décollement tournant. Ce seuil THR2 peut être déterminé expérimentalement. Il est choisi suffisamment grand pour éviter tout risque de fausse détection.

Si la température T(nTe) est inférieure ou égale au seuil THR2 (réponse oui ȧ l'étape test E140), aucune action n'est entreprise et une nouvelle mesure est considérée.

En revanche, si la température T(nTe) est supérieure au seuil THR2 (réponse non à l'étape test E140), un indicateur de température excessive notée I2 est activé (étape E150). Dans le mode de réalisation décrit ici, cette activation consiste à positionner l'indicateur I2 à la valeur 1.

Dans le mode de réalisation décrit ici, le module de détection 2D du dispositif 2 de détection est configuré pour déterminer si les deux indicateurs I1 et I2 sont activés simultanément (étape test E160), autrement dit, pour détecter si à un instant donné, les deux indicateurs I1 et I2 sont tous les deux positionnés à la valeur 1.

Dans le cas contraire (réponse non à l'étape test E160), le dispositif 2 de détection continue sa surveillance de la température en sortie de la turbine basse pression et des variations de la pression statique dans la chambre de combustion.

Si le module de détection 2D détermine que les deux indicateurs I1 et I2 sont activés (réponse oui à l'étape test E160), alors il détecte la présence d'un décollement tournant affectant le compresseur haute pression du turboréacteur 1 (étape E170) et le notifie par exemple via ses moyens d'entrée/sortie 10 afin de déclencher une opération de traitement de ce décollement tournant (étape E180). Un tel traitement est connu en soi et n'est pas décrit en détail ici.

Suite au traitement du décollement tournant, les indicateurs I1 et I2 sont réinitialisés à zéro de même que le compteur de bruit CNT (étape E190).

## Revendications

1. Procédé de détection d'un décollement tournant affectant un compresseur d'un turboréacteur (1), **caractérisé en ce qu'**il comprend :
- une étape de détermination (E90,E100) d'un niveau de variation d'une pression statique dans une chambre de combustion du turboréacteur autour d'une valeur moyenne de ladite pression statique ;
- une étape de comparaison (E11) du niveau de variation de la pression statique par rapport à un premier seuil (THR1) ;
- une étape de comparaison (E140) d'une température mesurée en sortie d'une turbine du turboréacteur par rapport à un deuxième seuil ; et
- si le niveau de variation de la pression statique est supérieur au premier seuil et la température en sortie de la turbine est supérieure au deuxième seuil, une étape de détection (E170) d'une présence d'un décollement tournant.

2. Procédé de détection selon la revendication 1 dans lequel l'étape de détermination comprend :
- une étape d'évaluation (E40), pour une pluralité d'échantillons d'un signal de mesure de la pression statique dans la chambre de combustion, d'une différence entre la valeur de la pression statique pour lesdits échantillons et la valeur moyenne de la pression statique ;
- pour chaque paire d'échantillons successifs de ladite pluralité d'échantillons comprenant un premier et un deuxième échantillon :
- une étape de calcul (E50) d'un écart entre la différence évaluée pour le premier échantillon et la différence évaluée pour le deuxième échantillon ;
- une étape de mise à jour (E90,E100) d'un compteur (CNT) en fonction de l'écart déterminé, ledit compteur représentant le niveau de variation de la pression statique par rapport à sa valeur moyenne.

3. Procédé de détection selon la revendication 2 dans lequel l'étape de mise à jour comprend :
- une décrémentation (E90) du compteur si l'écart déterminé est inférieur ou égal à un troisième seuil (THR3) ; et
- une incrémentation (E100) du compteur si l'écart déterminé est supérieur au troisième seuil (THR3).

4. Procédé de détection selon la revendication 3 dans lequel lors d'une incrémentation (E100) du compteur, le compteur est incrémenté d'une valeur qui est une fonction croissante de l'écart déterminé.

5. Procédé de détection selon la revendication 3 ou 4 dans lequel lors d'une décrémentation (E90) du compteur, le compteur est décrémenté d'une valeur inférieure aux valeurs utilisées pour incrémenter le compteur lors dincrémentations du compteur,

6. Procédé de détection selon l'une quelconque des revendications 2 à 5 comprenant en outre :
- une étape de détection (E60) d'une variation d'une position d'une géométrie variable du turboréacteur susceptible d'engendrer une variation de la pression statique dans la chambre de combustion ;
- une étape de suspension (E70) de l'étape de mise à jour du compteur tant que ladite variation de la position de la géométrie variable est détectée.

7. Procédé de détection selon l'une quelconque des revendications 2 à 6 comprenant: en outre, suite à la détection de la présence d'un décollement tournant :
- une étape de traitement (E180) dudit décollement tournant ; et
- suite à l'étape de traitement, une étape de réinitialisation (E190) du compteur (CNT).

8. Procédé de détection selon l'une quelconque des revendications 1 â 7 dans lequel l'étape de détermination du niveau de variation de la pression statique et les étapes de comparaison sont mises en œuvre suite à la détection (E10) d'un allumage du turboréacteur et d'une autorisation effective d'injection de carburant: dans le turboréacteur.

9. Dispositif de détection (2) d'un décollement tournant affectant un compresseur d'un turboréacteur, comprenant :
- un module de détermination (2A), configuré pour déterminer un niveau de variation d'une pression statique dans une chambre de combustion du turboréacteur autour d'une valeur moyenne de ladite pression statique ;
- un premier module de comparaison (2B), configuré pour comparer le niveau de variation de la pression statique par rapport à un premier seuil ;
- un deuxième module de comparaison (2C) configuré pour comparer une température mesurée en sortie d'une turbine du turboréacteur par rapport à un deuxième seuil ; et
- un module de détection (2D) d'une présence d'un décollement tournant, activé si le niveau de variation de la pression statique est supérieur au premier seuil et la température en sortie de la turbine du turboréacteur est supérieure au deuxième seuil.

10. Dispositif de détection selon la revendication 9, dans lequel le module de détermination comprend :
- un module d'évaluation (2A1), configuré pour évaluer pour une pluralité d'échantillons d'un signal de mesure de la pression statique dans la chambre de combustion, une différence entre la valeur de la pression statique pour lesdits échantillons et la valeur moyenne de la pression statique ;
- un module de calcul (2A2)et un module de mise à jour (2A3), activés pour chaque paire d'échantillons successifs de ladite pluralité d'échantillons comprenant un premier et un deuxième échantillon :
- ledit module de calcul étant configuré pour calculer un écart entre la différence évaluée pour le premier échantillon et la différence évaluée pour le deuxième échantillon ; et
- le module de mise à jour étant configuré pour mettre à jour un compteur en fonction de l'écart déterminé, ledit compteur représentant le niveau de variation de la pression statique par rapport ȧ sa valeur moyenne.

11. Turboréacteur (1) comprenant un dispositif de détection (2) selon la revendication 9 ou 10.

## Patentansprüche

1. Verfahren zur Erkennung eines rotierenden Strömungsabrisses mit nachteiliger Wirkung auf einen Turbostrahltriebwerksverdichter (1), **dadurch gekennzeichnet, dass** es Folgendes umfasst:
- einen Schritt des Bestimmens (E90, E100) eines Schwankungsniveaus eines statischen Drucks in einer Brennkammer des Turbostrahltriebwerks um einen Mittelwert des statischen Drucks;
- einen Schritt des Vergleichens (E11) des Schwankungsniveaus des statischen Drucks in Bezug auf einen ersten Schwellenwert (THR1);
- einen Schritt des Vergleichens (E140) einer am Ausgang einer Turbine des Turbostrahltriebwerks gemessenen Temperatur in Bezug auf einen zweiten Schwellenwert; und
- wenn das Schwankungsniveau des statischen Drucks höher als der erste Schwellenwert ist und die Temperatur am Ausgang der Turbine höher als der zweite Schwellenwert ist, einen Schritt des Erkennens (E170) eines Vorhandenseins eines rotierenden Strömungsabrisses.

2. Erkennungsverfahren nach Anspruch 1, wobei der Schritt des Bestimmens Folgendes umfasst:
- einen Schritt des Bewertens (E40), für eine Vielzahl von Abtastwerten eines Messignals des statischen Drucks in der Brennkammer, einer Differenz zwischen dem Wert des statischen Drucks für die Abtastwerte und dem Mittelwert des statischen Drucks;
- für jedes Paar von aufeinanderfolgenden Abtastwerten der Vielzahl von Abtastwerten, das einen ersten und einen zweiten Abtastwert umfasst:
- einen Schritt des Berechnens (E50) eines Abstands zwischen der für den ersten Abtastwert bewerteten Differenz und der für den zweiten Abtastwert bewerteten Differenz;
- einen Schritt des Aktualisierens (E90, E100) eines Zählers (CNT) in Abhängigkeit von dem bestimmten Abstand, wobei der Zähler das Schwankungsniveau des statischen Drucks in Bezug auf seinen Mittelwert darstellt.

3. Erkennungsverfahren nach Anspruch 2, wobei der Schritt des Aktualisierens Folgendes umfasst:
- eine Verminderung (E90) des Zählers, wenn der bestimmte Abstand kleiner oder gleich ein dritter Schwellenwert (THR3) ist; und
- eine Erhöhung (E100) des Zählers, wenn der bestimmte Abstand höher als der dritte Schwellenwert (THR3) ist.

4. Erkennungsverfahren nach Anspruch 3, wobei bei einer Erhöhung (E100) des Zählers der Zähler um einen Wert erhöht wird, der eine steigende Funktion des bestimmten Abstands ist.

5. Erkennungsverfahren nach Anspruch 3 oder 4, wobei bei einer Verminderung (E90) des Zählers der Zähler um einen Wert vermindert wird, der niedriger als die bei Erhöhungen des Zählers zum Erhöhen des Zählers verwendeten Werte ist.

6. Erkennungsverfahren nach einem der Ansprüche 2 bis 5, das ferner Folgendes umfasst:
- einen Schritt des Erkennens (E60) einer Schwankung einer Position einer variablen Geometrie des Turbostrahltriebwerks, die eine Schwankung des statischen Drucks in der Brennkammer erzeugen kann;
- einen Schritt des Unterbrechens (E70) des Schritts des Aktualisierens des Zählers, solange die Schwankung der Position der variablen Geometrie erkannt wird.

7. Erkennungsverfahren nach einem der Ansprüche 2 bis 6, das ferner im Anschluss an das Erkennen des Vorhandenseins eines rotierenden Strömungsabrisses Folgendes umfasst:
- einen Schritt des Behandelns (E180) des rotierenden Strömungsabrisses; und
- im Anschluss an den Schritt des Behandelns, einen Schritt des Reinitialisierens (E190) des Zählers (CNT).

8. Erkennungsverfahren nach einem der Ansprüchen 1 bis 7, wobei der Schritt des Bestimmens des Schwankungsniveaus des statischen Drucks und die Schritte des Vergleichens im Anschluss an das Erkennen (E10) einer Zündung des Turbostrahltriebwerks und einer tatsächlichen Freigabe der Einspritzung von Treibstoff in das Turbostrahltriebwerk durchgeführt werden.

9. Vorrichtung (2) zur Erkennung eines rotierenden Strömungsabrisses mit nachteiliger Wirkung auf einen Turbostrahltriebwerksverdichter, die Folgendes umfasst:
- ein Bestimmungsmodul (2A), das dazu ausgestaltet ist, ein Schwankungsniveau eines statischen Drucks in einer Brennkammer des Turbostrahltriebwerks um einen Mittelwert des statischen Drucks zu bestimmen;
- ein erstes Vergleichsmodul (2B), das dazu ausgestaltet ist, das Schwankungsniveau des statischen Drucks in Bezug auf einen ersten Schwellenwert zu vergleichen;
- ein zweites Vergleichsmodul (2C), das dazu ausgestaltet ist, eine am Ausgang einer Turbine des Turbostrahltriebwerks in Bezug auf einen zweiten Schwellenwert gemessenen Temperatur zu vergleichen; und
- ein Modul (2D) zur Erkennung eines Vorhandenseins eines rotierenden Strömungsabrisses, das aktiviert wird, wenn das Schwankungsniveau des statischen Drucks höher als der erste Schwellenwert ist und die Temperatur am Ausgang der Turbine des Turbostrahltriebwerks höher als der zweite Schwellenwert ist.

10. Erkennungsvorrichtung nach Anspruch 9, wobei das Bestimmungsmodul Folgendes umfasst:
- ein Bewertungsmodul (2A1), das dazu ausgestaltet ist, für eine Vielzahl von Abtastwerten eines Messignals des statischen Drucks in der Brennkammer eine Differenz zwischen dem Wert des statischen Drucks für die Abtastwerte und dem Mittelwert des statischen Drucks zu bewerten;
- ein Berechnungsmodul (2A2) und ein Aktualisierungsmodul (2A3), die für jedes Paar von aufeinanderfolgenden Abtastwerten der Vielzahl von Abtastwerten aktiviert werden, das einen ersten und einen zweiten Abtastwert umfasst;
- wobei das Berechnungsmodul dazu ausgestaltet ist, einen Abstand zwischen der für den ersten Abtastwert bewerteten Differenz und der für den zweiten Abtastwert bewerteten Differenz zu berechnen; und
- das Aktualisierungsmodul dazu ausgestaltet ist, einen Zähler in Abhängigkeit von dem bestimmten Abstand zu aktualisieren, wobei der Zähler das Schwankungsniveau des statischen Drucks in Bezug auf seinen Mittelwert darstellt.

11. Turbostrahltriebwerk (1), das eine Erkennungsvorrichtung (2) nach Anspruch 9 oder 10 umfasst.

## Claims

1. A method for detecting a rotating stall adversely affecting a
compressor of a turbojet engine (1), **characterized in that** it comprises:
- a step of determining (E90,E100) a level of variation of a static pressure in a combustion chamber of the turbojet engine around an average value of said static pressure;
- a step of comparing (E11) the level of variation of the static pressure relative to a first threshold (THR1);
- a step of comparing (E140) a temperature measured at the outlet of a turbine of the turbojet engine relative to a second threshold; and
- if the level of variation of the static pressure is greater than the first threshold and the temperature at the outlet of the turbine is greater than the second threshold, a step of detecting (E170) the presence of a rotating stall.

2. A detection method according to claim 1 wherein the determination step comprises:
- an evaluation step (E40), for a plurality of samples of a measurement signal of the static pressure in the combustion chamber, of a difference between the value of the static pressure for said samples and the average value of the static pressure;
- for each pair of successive samples of said plurality of samples comprising a first and a second sample:
- a step of calculating (E50) a deviation between the difference evaluated for the first sample and the difference evaluated for the second sample;
- a step of updating (E90,E100) a counter (CNT) depending on the deviation that was determined, said counter representing the level of variation of the static pressure relative to its average value.

3. The detection method according to claim 2 wherein the updating step comprises:
- decrementation (E90) of the counter if the deviation that was determined is less than or equal to a third threshold (THR3); and
- incrementation (E100) of the counter if the deviation that was determined is greater than the third threshold (THR3).

4. The detection method according to claim 3, wherein during an
incrementation (E100) of the counter, the counter is incremented by a value which is an increasing function of the deviation that was determined.

5. The detection method according to claim 3 or 4, wherein during a
decrementation (E90) of the counter, the counter is decremented by a value less than the values used for incrementing the counter during incrementations of the counter.

6. The detection method according to any one of claims 2 to 5,
comprising in addition:
- a step of detecting (E60) a variation of a position of a variable geometry of the turbojet engine able to cause a variation of the static pressure in the combustion chamber;
- a step of suspending (E70) the step of updating the counter as long as said variation of the position of the variable geometry is detected.

7. The detection method according to any one of claims 2 to 6,
comprising in addition, following the detection of the presence of a rotating stall:
- a step of treating (E180) said rotating stall; and
- following the treatment step, a step of reinitializing (E190) the counter (CNT).

8. The detection method according to any one of claims 1 to 7, wherein the step of determining the level of variation of the static pressure and the steps of comparison are implemented following the detection (E10) of an ignition of the turbojet engine and of an actual authorization to inject fuel into the turbojet engine.

9. A device for detecting (2) a rotating stall adversely affecting a
compressor of a turbojet engine, comprising:
- a determination module (2A), configured to determine a level of variation of a static pressure in a combustion chamber of the turbojet engine around an average value of said static pressure;
- a first comparison module (2B), configured to compare the level of variation of the static pressure relative to a first threshold;
- a second comparison module (2C) configured to compare a temperature measured at the outlet of a turbine of the turbojet engine relative to a second threshold; and
- a module for detecting (2D) a presence of a rotating stall, activated if the level of variation of the static pressure is greater than the first threshold and the temperature at the outlet of the turbine of the turbojet engine is greater than the second threshold.

10. The detection device according to claim 9, wherein the
determination module comprises:
- an evaluation module (2A1), configured to evaluate, for a plurality of samples of a measurement signal of the static pressure in the combustion chamber, a difference between the value of the static pressure for said samples and the average value of the static pressure;
- a calculation module (2A2) and an updating module (2A3), activated for each pair of successive samples of said plurality of samples comprising a first and a second sample:
- said calculation module being configured to calculate a deviation between the difference evaluated for the first sample and the difference evaluated for the second sample; and
- the updating module being configured to update a counter depending on the deviation that was determined, said counter representing the level of variation of the static pressure relative to its average value.

11. A turbojet engine (1) comprising a detection device (2) according to claim 9 or 10.
